# EUROPÄISCHE PATENTANMELDUNG

(11) **EP 0 800 303 A2**
(43) Veröffentlichungstag der Anmeldung: **08.10.1997**
(21) Anmeldenummer: 97101665.4
(22) Anmeldetag: 04.02.1997
(51) Int. Cl.: H04M 1/72

(54) **Telefonanlage für schnurlose Telefone**

(30) Priorität: 03.04.1996 DE 19613519
(71) Anmelder: ROBERT BOSCH GMBH, 70442 Stuttgart (DE)
(72) Erfinder: von Hundt, Gotthard, 60489 Frankfurt (DE); Klingenberg, Wolfgang, 31246 Lahstedt (DE); Meschenmoser, Reinhard, 30459 Hannover (DE); Kalkbrenner, Hans-Joachim, 38667 Bad Harzburg (DE); Pinckert, Tanja, 65779 Kelkheim (DE)

(57) **Zusammenfassung**

Es wird eine Telefonanlage für schnurlose Telefonie vorgeschlagen, die zur Steuerung von elektrischen Geräten und zur Abfrage des Zustands der elektrischen Geräte dient. Die Telefonanlage umfaßt mindestens eine Zentrale (2, 3) und mindestens einen davon abgesetzten insbesondere als schnurlosen Telefonhandapparat ausgebildeten Sendeempfänger (4, 5). Weiterhin ist mindestens ein weiterer Empfänger (6) vorgesehen, der mit einem elektrischen Gerät (7) in Verbindung steht, das von dem Empfänger (6) steuerbar ist. Die Telefonanlage ist so ausgebildet, daß Steuerbefehle aussendbar sind. Außerdem ist mindestens ein weiterer Sender (6) vorsehbar, der ebenfalls mit dem elektrischen Gerät (7) in Verbindung steht und vom elektrischen Gerät (7) empfangene Zustandsinformationen aussendet. Die mindestens eine Zentrale (2, 3) ist über eine Nebenstellenanlage (1) mit einem Fernsprechnetz (15) verbindbar. Über eine Telefonnummer läßt sich das elektrische Gerät (7) vom Sendeempfänger (4, 5) anwählen und durch entsprechende Tastenkombinationen an einer Tastatur des Sendempfängers (4, 5) lassen sich Steuerbefehle erzeugen und über die Zentrale (2, 3) und den Empfänger (6) an das elektrische Gerät (7) übertragen. Umgekehrt können Zustandsinformationen vom elektrischen Gerät (7) über den Sender (6) und die Zentrale (2, 3) an den Sendeempfänger (4, 5) weitergeleitet und dort angezeigt werden.

## Beschreibung

### Stand der Technik

Die Erfindung geht von einer Telefonanlage nach der Gattung des Hauptanspruchs aus.

Aus der Zeitschrift 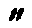 Funkschau 11/95", Seite 40-43, sind bereits Telefonanlagen für schnurlose Telefone nach dem DECT-Standard bekannt, bei denen sich jeweils bis zu zwölf als Handsets bezeichnete schnurlose Telefonhandapparate von einer als Basisstation bezeichneten Zentrale bedienen lassen. Jede Basisstation bedient eine Funkzelle, innerhalb der sich ein Handset an der Basisstation betreiben läßt. Das in der Druckschrift beschriebene Verfahren erlaubt das perfekte Weiterreichen des Handsets von einer Funkzelle zur nächsten, wobei ein Wechsel des verwendeten Zeitschlitzpaares zur Sprach- oder Datenübertragung stattfindet und das Gespräch dann über die Basisstation der benachbarten Funkzelle abgewickelt wird.

### Vorteile der Erfindung

Die erfindungsgemäße Telefonanlage mit den Merkmalen des Hauptanspruchs hat demgegenüber den Vorteil, daß über die Telefonanlage elektrische Geräte fernbedienbar sind, so daß bei Vorhandensein einer Telefonanlage für insbesondere als schnurlose Telefonhandapparate ausgeführte Sendeempfänger auf eine eigene Fernbedienung oder Fernsteuerung für die elektrischen Geräte verzichtet werden kann, so daß das elektrische Gerät nur mit einem Empfänger für die von der Telefonanlage aussendbaren Steuerbefehle auszustatten ist. Auf diese Weise läßt sich eine wenig aufwendige und kostensparende Fernbedienung elektrischer Geräte realisieren. Da es sich beim Datenaustausch zur Steuerung der elektrischen Geräte um internen Fernsprechverkehr handelt, entstehen auch keine Gebühren.

Vorteilhaft ist außerdem, daß die in einem nach dem DECT-System geführten Gespräche abhörsicher sind, so daß die elektrischen Geräte nicht von Unbefugten beeinflußbar sind, was insbesondere für Alarmanlagen und Gefahrenmeldeanlagen von Bedeutung ist.

Durch die in den Unteransprüchen aufgeführten Maßnahmen sind vorteilhafte Weiterbildungen und Verbesserungen der im Hauptanspruch angegebenen Telefonanlage möglich.

Vorteilhaft gemäß Anspruch 2 ist die Verwendung eines weiteren Senders, der in Verbindung mit dem elektrischen Gerät steht. Auf diese Weise lassen sich Zustandsinformationen des elektrischen Gerätes zur Telefonanlage übertragen und über eine Zentrale an einen entsprechenden Sendeempfänger weiterleiten. Auf diese Weise können Informationen zwischen Sendeempfängern und elektrischen Geräten in beiden Richtungen ausgetauscht werden. Vorteilhaft ist auch, daß zur Aussendung der Zustandsinformationen vom Sender nicht unbedingt eine Abfrage über einen Sendeempfänger seitens eines Benutzers erforderlich ist, sondern daß der Sender auch durch Anregung des elektrischen Gerätes diese Zustandsinformationen aussenden kann. Dadurch wird der Benutzer über den Zustand des elektrischen Gerätes auch dann informiert, wenn er diesen Zustand nicht selbst abfragt.

Vorteilhaft nach Anspruch 4 ist die bauliche Einheit von Empfänger und Sender. Dadurch werden Kosten und Aufwand gespart und Sender und Empfänger lassen sich platzsparend unterbringen.

Vorteilhaft nach Anspruch 5 ist es, daß der weitere Empfänger über eine Telefonnummer anwählbar ist. Auf diee Weise ist eine einfache Adressierung gegeben, die der Benutzer zudem gewohnt ist.

Vorteilhaft nach Anspruch 6 ist die Bildung der Steuerbefehle durch Tastenkombinationen an einer Tastatur des Sendeempfängers. Die Tasten eines als Telefonhandapparat ausgeführten Sendeempfängers lassen sich auf diese Weise sowohl für den Fernsprechverkehr als auch zur Kommunikation mit den elektrischen Geräten verwenden, so daß kein zusätzlicher konstruktiver Aufwand zur Eingabe von Steuerbefehlen erforderlich ist und durch die Doppelverwendbarkeit der Tasten Platz gespart wird. Die Eingabe von Steuerbefehlen durch Tastenkombinationen stellt für den Benutzer zudem eine einfache Bedienmöglichkeit dar, die er bereits von anderen Anwendungen, z. B. Geldautomat, gewohnt ist.

Der Anschluß der Zentrale über eine Nebenstellenanlage an ein Fernsprechnetz gemäß Anspruch 7 beinhaltet den Vorteil, daß die Kommunikation mit den elektrischen Geräten auch außerhalb der Telefonanlage bzw. dem von den Zentralen abgedeckten Bereich möglich ist.

Vorteilhaft gemäß Anspruch 8 ist eine Sende- und/oder Empfangseinheit, die mit einem elektrischen Gerät verbindbar ist und als Schnittstelle zwischen der Telefonanlage und dem elektrischen Gerät dient. Dadurch läßt sich das elektrische Gerät auf einfache Art und Weise in die Telefonanlage integrieren und zu einem kommunikationsfähigen Teilnehmer machen.

### Zeichnung

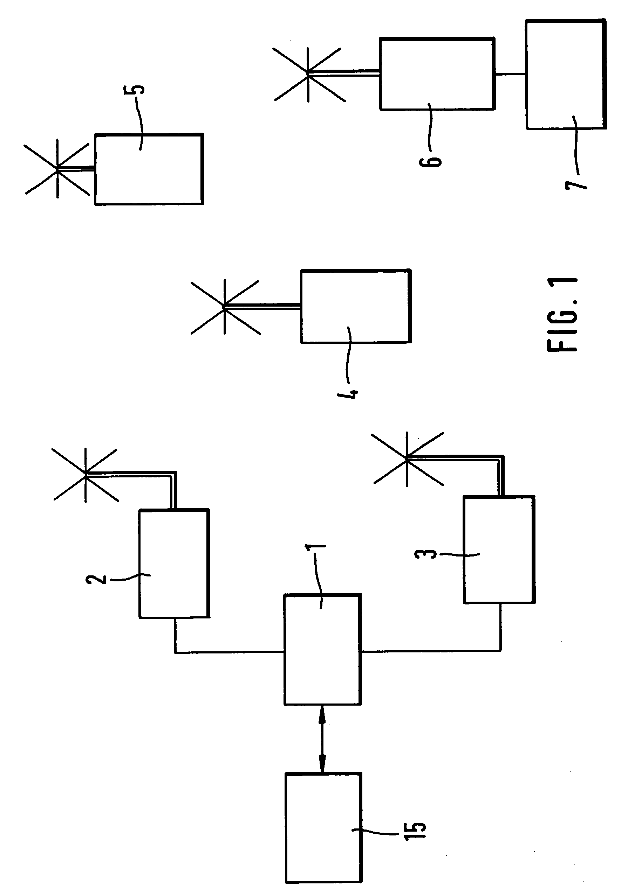

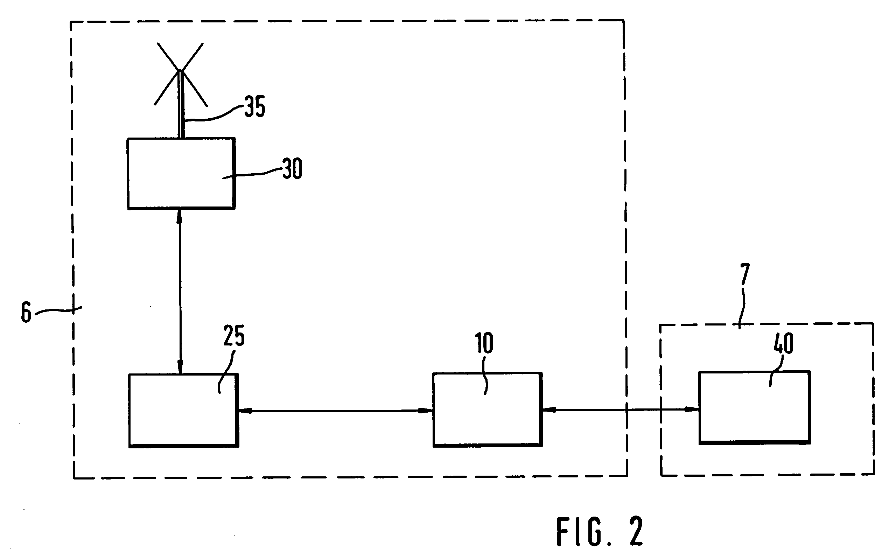

Ein Ausführungsbeispiel der Erfindung ist in der Zeichnung dargestellt und in der nachfolgenden Beschreibung näher erläutert. Es zeigen Figur 1 eine an ein Fernsprechnetz angeschlossene Telefonanlage mit einem elektrischen Gerät und einer zugehörigen Sende- und Empfangseinheit und Figur 2 den Aufbau einer Sende- und Empfangseinheit.

### Beschreibung des Ausführungsbeispiels

In Figur 1 kennzeichnet 15 ein öffentliches Fernsprechnetz, an das eine Nebenstellenanlage 1 angeschlossen ist. Mit der Nebenstellenanlage 1 sind eine erste Zentrale 2 und eine zweite Zentrale 3 verbunden. Beide Zentralen 2 und 3 sind jeweils als DECT-Basisstation ausgebildet. Sie bedienen jeweils eine in der Figur 1 nicht dargestellte Funkzelle. Die beiden Zentralen 2 und 3 gehören zu einer Telefonanlage, die auch einen ersten und einen zweiten jeweils von den beiden Zentralen 2 und 3 abgesetzten insbesondere als schnurlosen Telefonhandapparat ausgeführten Sendeempfänger 4 und 5 umfaßt. Es kann sich dabei jedoch auch um einen einfacher aufgebauten Sendeempfänger handeln, der übliche Telefonbausteine, wie z. B. Sprechkreis nicht enthält. Das Ausführungsbeispiel soll im folgenden jedoch unter Verwendung von schnurlosen Telefonhandapparaten beschrieben werden. Zur Telefonanlage gehört auch eine mit einem elektrischen Gerät 7 verbundene Sende- und Empfangseinheit 6.

Der Datenübertragung innerhalb der Telefonanlage liegt der DECT-Standard zugrunde. Das bedeutet, daß auch die beiden schnurlosen Telefonhandapparate 4 und 5 sowie die Sende- und Empfangseinheit 6 DECT-kompatibel sind. In anderen Ausführungsbeispielen ist auch ein Datenaustausch mit digitalen Datensignalen gemäß einem Mobiltelefon-System, beispielsweise unter Verwendung des E1-Standards oder dergleichen, möglich. Der Datenaustausch kann jedoch auch mit analogen Datensignalen auf vorgegebenen Kanälen, beispielsweise unter Verwendung des CT1-Standards oder dergleichen abgewickelt werden. Die Telefonanlage kann beispeilsweise in einem großen Einfamilienhaus zum Einsatz kommen. Die Anzahl der Zentralen ist dabei abhängig von der Größe und Komplexität des zu versorgenden Hauses, insbesondere unter Einbeziehung von Garten, Garage, Keller oder dergleichen und kann mehr als zwei betragen, es sind jedoch auch Anwendungen mit nur einer Zentrale möglich. In Wohngebäuden mit mehreren Wohnungen können sich die Versorgungsgebiete mehrerer Zentralen räumlich überlagern, ohne sich gegenseitig zu beeinflussen oder abzuhören. Die Anzahl der schnurlosen Telefonhandapparate ist abhängig vom Ausbau des Systems.

Die Sende- und Empfangseinheit 6 besitzt eine eigene Telefonnummer und kann somit von einem der beiden schnurlosen Telefonhandapparate 4 und 5 angewählt werden. Durch eine am Telefonhandapparat 4, 5 eingegebene Tastenkombination kann der Benutzer Steuerbefehle erzeugen, die über die entsprechende Zentrale 2, 3 an die Sende- und Empfangseinheit 6 übertragen werden, nachdem erfolgreich eine Verbindung zwischen dem entsprechenden schnurlosen Telefonhandapparat 4, 5 und der Sende- und Empfangseinheit 6 hergestellt wurde. Die Sende- und Empfangseinheit 6 empfängt die durch Tastenkombination gebildeten Steuerbefehle, wertet sie aus und wandelt sie in entsprechende Steuerbefehle für das elektrische Gerät 7 um. Auf diese Weise können Funktionen des elektrischen Gerätes 7 in Abhängigkeit des übermittelten Steuerbefehls aktiviert werden. So kann beispielsweise ein als Waschmaschine ausgebildetes elektrisches Gerät in Betrieb gesetzt oder ausgeschaltet werden.

Die übertragenen Steuerbefehle können auch dazu dienen, Zustandsinformationen von der Steuerung des elektrischen Gerätes 7 abzufragen. Das elektrische Gerät 7 überträgt daraufhin entsprechende Zustandsinformationen an die Sende- und Empfangseinheit 6, die diese Zustandsinformationen aussendet. Über die entsprechende Zentrale 2, 3, die den Datenaustausch zwischen schnurlosem Telefonhandapparat 4, 5 und der Steuer- und Empfangseinheit 6 abwickelt, werden die Zustandsinformationen an den abfragenden schnurlosen Telefonhandapparat 4, 5 weitergeleitet und dort beispielsweise auf einem Display angezeigt.

Es ist auch möglich, daß das elektrische Gerät 7 ohne Abfrage seitens eines schnurlosen Telefonhandapparates 4, 5 Zustandsinformationen über die Sende- und Empfangseinheit 6 und eine der beiden Zentralen 2 und 3 an einen oder beide schnurlose Telefonhandapparate 4 und 5 übermittelt. So kann die bereits erwähnte Waschmaschine einem Benutzer durch Anzeige auf einem schnurlosen Telefonhandapparat 4, 5 mitteilen, daß das laufende Waschprogramm beendet ist.

Die Sende- und Empfangseinheit 6 umfaßt in einer baulichen Einheit einen Sender und einen Empfänger, wobei der Empfänger zum Empfang von Steuerbefehlen und deren Weiterleitung an das elektrische Gerät und der Sender zur Aussendung von vom elektrischen Gerät 7 abgegebenen Zustandsinformationen dient. Sender und Empfänger können auch körperlich voneinander getrennt ausgeführt sein. In Figur 2 ist jedoch der Fall dargestellt, daß Sender und Empfänger eine bauliche Einheit bilden. Dabei kennzeichnet 35 eine Sende-Empfangsantenne, die mit einem Sende-Empfangs-Baustein 30 verbunden ist. Über eine Steuereinheit 25 ist eine Geräteschnittstelle 10 an den Sende-Empfangs-Baustein 30 angeschlossen. Die Geräteschnittstelle 10 ist mit einer Steuerung 40 des elektrischen Gerätes 7 verbunden. Weitere für den Betrieb des elektrischen Gerätes 7 erforderliche Bauteile sind nicht in der Figur 2 dargestellt.

Der Sende-Empfangs-Baustein 30 beinhaltet ein Hochfrequenzteil zum Senden und Empfangen auf Frequenzen zwischen 1,88 und 1,9 Gigahertz nach dem DECT-Standard sowie Bausteine zur Abhandlung der zeitlichen Bedingungen und der DECT-Protokolle. Die Steuereinheit 25 enthält einen Microcontroller zur Steuerung des Betriebs der Sende- und Empfangseinheit 6, wobei die zur Steuerung erforderliche Betriebssoftware in einem mit dem Microcontroller verbundenen EEPROM abgelegt sein kann.

Werden über die Sende-Empfangsantenne 35 in Form von Tastenkombinationen erzeugte Steuerbefehle empfangen, so werden sie an den Sende-Empfangs-Baustein 30 weitergeleitet und dort zur Auswertung der Steuerbefehle vorbereitet, die dann in der Steuereinheit 25 erfolgt. Dort findet eine Umwandlung der Steuerbefehle für das elektrische Gerät 7 statt, so daß ein entsprechendes Datensignal über die Schnittstelle 10, die zur Anpassung des Datensignals für die Übertragung zur Steuerung 40 des elektrischen Gerätes 7 dient, an die Steuerung 40 weitergeleitet wird. In Abhängigkeit der übertragenen Steuerbefehle veranlaßt die Steuerung 40 die Aktivierung von Gerätefunktionen bzw. die Ermittlung des Gerätezustandes. Ein ermittelter Gerätezustand wird von der Steuerung 40 an die Schnittstelle 10 übertragen, in der wiederum eine Anpassung des entsprechenden Zustandsdatensignals für die Übertragung an die Steuereinheit 25 durchgeführt wird. Über die Steuereinheit 25 gelangt das Zustandsdatensignal zum Sende-Empfangs-Baustein 30, wobei die Steuereinheit 25 den Sende-Empfangs-Baustein 30 zur Abstrahlung entsprechender Zustandsdatensignale über die Sende-Empfangsantenne 35 veranlaßt.

Der beschriebene Aufbau der Sende- und Empfangseinheit 6 entspricht auch dem Aufbau eines schnurlosen Telefonhandapparates nach dem DECT-Standard, mit dem Unterschied, daß die Sende- und Empfangseinheit 6 keine Baugruppe zur Umwandlung der Sprache zwischen digitaler und analoger Darstellung mittels beispielsweise eines ADPCM-Codecs und keine Schnittstellen zum Benutzer, wie Sprechkreis, Tastatur und Anzeige umfaßt. Somit lassen sich die erfindungsgemäßen Sende- und Empfangseinheiten auf einfache und wenig aufwendige Weise durch entsprechende Abwandlung von schnurlosen Telefonhandapparaten herstellen.

Werden mehrere elektrische Geräte auf die beschriebene Weise in eine Telefonanlage integriert, so kann jedes elektrische Gerät durch eine eigene Telefonnummer adressierbar sein. Es ist jedoch auch möglich, allen elektrischen Geräten oder Gruppen von elektrischen Geräten eine gemeinsame Telefonnummer zuzuordnen und die Adressierung des einzelnen elektrischen Gerätes innerhalb des übermittelten Datentelegramms durchzuführen.

Bei Verwendung von mehreren elektrischen Geräten und entsprechend angeschlossenen Sende- und Empfangseinheiten ist auch eine Kommunikation der elektrischen Geräte untereinander über die Zentralen 2, 3 denkbar.

Da die Zentralen 2 und 3 über die Nebenstellenanlage 1 mit dem öffentlichen Fernsprechnetz 15 verbunden sind, ist es auch möglich, Steuerbefehle von außerhalb der Telefonanlage an das elektrische Gerät 7 zu übertragen bzw. Zustandsinformationen vom elektrischen Gerät 7 an einen Teilnehmer des öffentlichen Fernsprechnetzes weiterzuleiten. Auf diese Weise wird die Reichweite für die Fernbedienung des elektrischen Gerätes 7 bzw. für die Abfrage seines Zustandes beliebig ausdehnbar. Dabei sind selbstverständlich entsprechende Sicherungsmaßnahmen gegen unberechtigten Zugriff vorzusehen. So ist es beispielsweise denkbar, berechtigte Benutzer durch einen Tastencode den gewünschten Zugriff zu verschaffen.

## Patentansprüche

1. Telefonanlage für schnurlose Telefonie, insbesondere nach dem DECT-Standard, mit mindestens einer Zentrale (2, 3) und mindestens einem davon abgesetzten insbesondere als schnurloser Telefonhandapparat ausgebildeten Sendeempfänger (4, 5), dadurch gekennzeichnet, daß mindestens ein weiterer Empfänger (6) vorgesehen ist, daß der weitere Empfänger (6) mit einem elektrischen Gerät (7) in Verbindung steht, daß das elektrische Gerät (7) von diesem Empfänger (6) steuerbar ist und daß die Telefonanlage so ausgebildet ist, daß Steuerbefehle aussendbar sind.

2. Telefonanlage nach Anspruch 1, dadurch gekennzeichnet, daß mindestens ein weiterer Sender (6) vorgesehen ist, daß der weitere Sender (6) mit dem elektrischen Gerät (7) in Verbindung steht, daß der weitere Sender (6) Zustandsinformationen vom elektrischen Gerät (7) empfängt und diese Zustandsinformationen vom Sender (6) aussendbar sind.

3. Telefonanlage nach Anspruch 2, dadurch gekennzeichnet, daß die Zustandsinformationen am Sendeempfänger (4, 5) anzeigbar sind.

4. Telefonanlage nach Anspruch 1, 2 oder 3, dadurch gekennzeichnet, daß der weitere Empfänger (6) und der weitere Sender (6) eine bauliche Einheit bilden.

5. Telefonanlage nach einem der vorherigen Ansprüche, dadurch gekennzeichnet, daß der weitere Empfänger (6) über eine Telefonnummer anwählbar ist.

6. Telefonanlage nach einem der vorherigen Ansprüche, dadurch gekennzeichnet, daß die Steuerbefehle durch Tastenkombinationen an einer Tastatur des Sendeempfängers (4, 5) bildbar sind.

7. Telefonanlage nach einem der vorherigen Ansprüche, dadurch gekennzeichnet, daß die Zentrale (2, 3) über eine Nebenstellenanlage (1) an ein Fernsprechnetz (15) anschließbar ist.

8. Sende- und/oder Empfangseinheit (6) für eine Telefonanlage nach einem der Ansprüche 1 bis 7, dadurch gekennzeichnet, daß die Sende- und/oder Empfangseinheit (6) mit einem elektrischen Gerät (7) verbindbar ist, daß empfangene Signale in Steuerbefehle für das elektrische Gerät (7) umwandelbar sind und/oder daß vom elektrischen Gerät (7) abgegebene Zustandsinformationen aussendbar sind.
